# EUROPEAN PATENT APPLICATION

(11) **EP 3 037 674 A1**
(43) Date of publication of application: **29.06.2016**
(21) Application number: 14199808.8
(22) Date of filing: 22.12.2014
(51) Int. Cl.: F04D 27/02, F04D 29/54, F02C 6/08, F01D 5/08, F01D 11/00, F01D 25/12

(54) **Engine and method for operating said engine**

(71) Applicant: ALSTOM Technology Ltd, 5400 Baden (CH)
(72) Inventor: Simon-Delgado, Carlos, 5400 Baden (CH); Taheny, Oliver Joseph, 8046 Zürich (CH); Olmes, Sven, 5210 Windisch (CH); Busekros, Armin, 8049 Zürich (CH); Alberti, Luca, 5443 Niederrohrdorf (CH); Jemora, Daniel, 5213 Villnachern (CH); Rossi, Eugenio, 5145 Nussbaumen (CH); Simonet, Christophe, 5408 Ennetbaden (CH)
(74) Representative: Bernotti, Andrea

(57) **Abstract**

Disclosed is an engine, said engine comprising a compressor, an expansion machine, and a shaft (21), the shaft having a direction of rotation. The engine comprises a compressed fluid main flow path, a flow divider means (4) arranged at and fluidly connected to the compressed fluid main flow path, and a duct (12) fluidly connecting the flow divider and components of the expansion machine. The duct is arranged such that, when the engine is operated, a fluid (7) is guided through the duct from the flow divider towards said expansion machine components. A flow deflector device (8) is arranged within a flow path provided by any of the flow divider means and/or said duct, said flow deflector device being arranged and adapted to deflect and thereby accelerate a flow therethrough directed form the flow divider towards the expansion machine components in a tangential direction, wherein said deflection is in particular effected into the shaft direction of rotation.
Corresponding method of cooling components of an engine (1).

## Description

### TECHNICAL FIELD OF INVENTION

The present disclosure relates to the field of engines as described in the preamble of claim 1. In particular it may relate to working engines, and more particular gas turbines. It further relates to a guide vane element, in particular suitable for use in a turbo compressor of such an engine. It further relates to a method for cooling components of the engine.

### BACKGROUND OF INVENTION

High efficiency engines generally require high working temperatures. Internal combustion engines may provide working fluids with temperatures far in excess of the temperatures endurable by most materials, especially when at the same time mechanical strength needs to be maintained. Components of engines serving for the expansion of hot compressed working fluids thus may require adequate cooling. This is in particular true for components exposed to a non-intermittent flow of high temperature fluids, in particular combustion gases, such as is the case for the components in the hot gas path of the expansion turbine of a gas turbine engine. The combustor and the guide vanes and rotating blades at least of the first stages of today's internal combustion gas turbines require reliable cooling. Also the parts of the turbine stator and the rotor, such as e.g. the shaft or the part of the shaft which is arranged downstream from the compressor, may require cooling. One method of providing coolant is to extract some air from within or after a gas turbine compressor, bypassing the combustor with said extracted air flow, and guiding said air to the components requiring cooling. It is understood that the extraction of air from the compressor which then at least partly bypasses the thermodynamic process is expensive and thus the cooling air should be used as efficient as possible in order to reduce efficiency losses caused by extracting the cooling air.

While it is relatively easy to guide cooling air to stationary parts of the gas turbine, it is more challenging to guide the cooling air to the rotor parts. It is known in the art e.g. to extract air between the last compressor blade and vane rows. This is where usually the rotor shaft meets a stationary cover. At this location an annular leakage gap is present, which may be used for extracting coolant. The extracted coolant is then guided to rotating turbine parts e.g. through a duct formed within the rotor or through an annular gap formed between the rotor or shaft outer surface and the inner wall of the cover.

However, as the pressure ratio of the gas flowing through the first turbine vane row is considerably higher than that effected by the last compressor vane row, complex sealing mechanisms need to be provided at the downstream end of this coolant duct, and usually certain measures are applied to adapt the pressure of the coolant before it is fed to e.g. the rotating turbine blades and then discharged into the turbine hot gas flow. Furthermore it is noted that the temperature of the fluid applied for cooling upon extraction from the compressor may, depending upon the engine pressure ratio and ambient temperature, easily be in a range of 300 to above 500°C.

### SUMMARY OF THE INVENTION

It is an object of the devices and methods disclosed herein to improve the art. It is a further object of the devices and methods disclosed herein to overcome certain disadvantages of the art, and more specifically of the art described above.

This is achieved by an engine as described in claim 1, and further by the components and methods described in the further independent claims.

The present disclosure teaches an engine, said engine comprising a compressor, an expansion machine, and a shaft, the shaft having a direction of rotation. Said engine may be a working engine. Further, said engine may be a gas turbine, and in particular an internal combustion gas turbine.

It is noted that within this disclosure "shaft" and "rotor" are used largely synonymously, whereby the rotor comprises the shaft and any rotating parts fixed or otherwise mounted thereto, such as e.g. rotating blades, heat shields, and so forth.

Further, within this disclosure, vanes denote stationary flow guide elements which are fixed or otherwise connected to an engine stator, while blades denote rotating flow deflection elements fixed or otherwise mounted to the engine rotor.

The engine comprises a compressor main flow path. It is understood that within the meaning of the present disclosure the compressed fluid main flow path comprises the main flow path within the compressor and may as well comprise a flow path from the compressor outlet to a combustor or any other compressed fluid heating device. A flow divider means is arranged at and fluidly connected to the compressed fluid main flow path. A duct is fluidly connecting the flow divider and components of the expansion machine, and is arranged such that, when the engine is operated, fluid is guided through the duct from the flow divider to said components. Further, a flow deflector device is arranged within a flow path provided by any of the flow divider means and/or said duct. The flow deflector device is arranged and adapted to deflect and in particular thereby accelerate a fluid flow therethrough directed form the flow divider towards the expansion machine components referred to above in a tangential direction. The deflector device may be arranged at an upstream side or in particular end of the duct. In this case the effects of deflecting the fluid flow flowing through the duct becomes effective within the entire duct.

In one aspect of the present disclosure the deflector device is designed and arranged such that said deflection is effected into the shaft direction of rotation. However, embodiments are conceivable in which the deflector device is designed and arranged such that the deflection is effected against the shaft direction of rotation.

As will become apparent, in accelerating a compressible fluid both temperature and static pressure are lowered. Said extracted compressed fluid partial flow, as further becomes apparent, is intended to serve as a coolant for engine components. Due to the temperature decrease cooling efficiency is enhanced. In particular when the coolant is guided along the outer surface of the shaft or through a rotor drum, as lined out in more detail below, the rotor cooling is improved, or heat intake from the medium to the shaft, which itself forms a part of the rotor, is reduced. It will further be appreciated that due to the reduction of static pressure in the coolant duct leakages of coolant on the downstream hot gas side of the coolant duct may be reduced and/or sealings between the coolant duct and a hot working fluid main flow may be less expensive. As will also be appreciated, in accelerating the coolant flow in tangential direction said acceleration may be effected without changing the coolant duct cross section. Further benefits may be seen in directing the coolant flow in the direction of the shaft rotation. That is, on one hand, in particular when the coolant duct is formed in a gap, for instance an annular gap, between the shaft and a stationary part, for instance a cover as will be lined out in more detail below, friction losses between the coolant and the rotor are reduced. In particular for large scale engines, such as stationary power generation gas turbines, the tangential speed at the outer surface of the shaft may reach a considerable magnitude far in excess of 100m/s. As will be appreciated, and in further consideration of the large surface area of such a shaft, friction losses between a coolant flow, having a largely different tangential speed against the outer surface of the shaft, and the shaft may be considerable. Due to the proposed tangential acceleration of the flow, the tangential speed of the flow may have a closer match to that of the shaft outer surface and said friction losses may be considerably reduced. It will also become apparent that, if the compressed fluid partial flow is extracted downstream from a turbo compressor rotating blade row, and in particular as the rotating blades are arranged on the shaft, the flow upon extraction already has a tangential speed in the direction of the shaft rotation and thus less additional flow acceleration and deflection is required in the deflector to achieve the desired effect.

In boosting the Reynolds number of the extracted fluid flow due to the acceleration the heat transfer between components and the extracted fluid flow may be enhanced.

Further, in another aspect of the present disclosure, if the compressed fluid partial flow is to be conducted inside a rotor cavity, the deflector may be shaped such that it adds an additional velocity component to the extracted medium flow which is directed towards the rotor, that is, for instance, radially inward bound. The deflector will then be adapted, configured and arranged such as to deflect the extracted fluid flow in a radially inward bound as well as in a circumferential direction. In particular in adding this radially inward bound, centripetal velocity component, and combined with the above mentioned tangential velocity component in the shaft direction of rotation, the flow may be directed towards inlet openings of the shaft which provide a fluid connection between an exterior of the shaft or rotor and the rotor cavity, or, in other words, between the extracted fluid flow and the rotor or shaft cavity. The tangential velocity component of the flow may have a match with the tangential speed of the rotor shaft exterior and consequently said inlet openings. Due to this match and direction of flow towards said openings the inflow of medium into the inlet openings may be largely facilitated without providing fancy geometries of said inlet openings.

Further effects and benefits of the teaching of the present disclosure which may or may not be explicitly lined out may be inherent or become apparent to the skilled person.

It will be understood that in a flow divider as applied in the proposed engine additional properties to those lined out above may be found beneficial. It has for instance proven beneficial in designing such a flow divider to strive for a flow deflection a smooth as possible. In particular sharp deflection causing eddy flows should be avoided. Thus, while a decrease in static pressure has shown desirable, total pressure losses of the extracted fluid flow which would be detrimental to the overall engine efficiency are avoided or at least reduced to a minimum.

In an embodiment of the engine the compressor is a turbo compressor comprising at least one row of rotating or running blades arranged on the shaft and a corresponding row of stationary vanes arranged downstream from said row of running blades, and the flow divider is for instance arranged between said row of blades and said corresponding row of vanes. One benefit of said arrangement is that the compressed fluid when extracted by the flow divider will, due to the acceleration of the fluid effected by the rotating blades, already has a first tangential velocity component in the direction of the shaft or rotor rotation, or, in other words, the static pressure buildup in the compressor stage has not completely been effected. Thus less deflection is required in the deflector device to achieve a desired effect. In a further embodiment the turbo compressor is a multistage turbo compressor and the flow divider may be arranged between the corresponding blade row and vane row of a most downstream (that is last) compressor stage.

The flow deflector device may comprise a multitude of airfoils. These may be arranged to provide an upstream nominal flow angle and a downstream nominal flow angle, or, as typically also called for an array of airfoil in a flow duct, an inflow angle and an outflow angle, each angle measured against an axial direction of the fluid flow. Said axial direction of the fluid flow may be considered identical with the axial direction of the shaft, in particular in an axial flow turbo engine. Said angles are for instance defined by the direction of the airfoil camber line at the leading and trailing edge, respectively. In particular the downstream nominal angle or outflow angle is bigger than the upstream nominal angle or inflow angle, and is tilted towards the shaft rotation direction such that a fluid flow is deflected into the direction of shaft rotation when flowing along the airfoil, or through an array of airfoils, respectively. The deflection device may thus resemble a guide vane row disposed on the flow divider or in the coolant duct. It is understood that the flow may also be deflected against the direction of shaft rotation, which will require a large deflection angle. The benefits of applying such a large deflection angle to have a tangential speed directed against the direction of shaft rotation will be lined out in more detail below.

Further embodiments are conceivable in which the deflection device may be an appropriately shaped nozzle or orifice, or a multitude of nozzles or orifices, respectively.

It is understood that the deflector is a stationary component of the engine.

In a further embodiment the deflection device is arranged on a stationary part of the engine and may in particular be arranged within a gap formed between the rotor shaft and said stationary part. The deflection device may in particular be provided on one of a cover surrounding the shaft, a guide vane radially inner part, in particular a radially inner shroud of the guide vane, or the flow divider. Also the flow divider may be formed by one of the cover or a guide vane radially inner part, in particular a radially inner shroud of the guide vane.

In a further embodiment of the engine a guide vane row of a turbo compressor, in particular the most downstream guide vane row of a multistage turbo compressor, may comprise a radially inner shroud or shroud elements. That is, the vanes of said stage comprise a foot arranged on a radially outer side of the vane row facing an engine housing and in particular being furnished with means for attaching the vanes to the engine housing, and a tip arranged on a radially inner side facing the shaft. Said tips may be connected to a shroud and/or may be furnished with shroud elements. Said shroud elements may be monobloc elements with the vanes, i.e. may have been manufactured in one piece with the vanes. The shroud may then form a part of a cover surrounding the shaft.

The deflection device may in turn be arranged on a radially inner shroud of compressor guide vanes and may be formed as one piece with and as an integral part of the shroud or of shroud elements.

The engine components to which the extracted compressed fluid partial flow, e.g. as a coolant flow, is directed may be rotating engine components and may be arranged on the shaft. In an embodiment the engine may be a gas turbine engine, in particular an internal combustion gas turbine. It will be appreciated that such a gas turbine engine comprises at least one turbo compressor and at least one expansion turbine. At least some rotating blades of an expansion turbine may then typically be arranged on one common shaft with at least some turbo compressor rotating blades or on a shaft otherwise drivingly connected to a turbo compressor shaft, thus providing drive power to the turbo compressor. It will be readily appreciated by the skilled person how this applies e.g. to a single shaft gas turbine with a drive end as typically applied in stationary power generation gas turbine engines, to multiple shaft gas turbine engines as applied e.g. for aircraft propulsion, gas turbine engines comprising a dedicated useful power expansion turbine and a dedicated drive shaft as may e.g. be applied for automotive drive or some helicopters or turboprop engines, and other types of engines. Said engine components are rotating components and are in particular arranged on a shaft and may be e.g. rotating blades or shaft cover or shielding elements for which cooling is desired.

In an embodiment of the disclosed engine the deflector device may be designed such as to guide the extracted compressed fluid into an internal rotor drum provided by a cavity inside the shaft. A flow duct for guiding the extracted fluid flow or coolant comprises said rotor drum. In another embodiment the flow duct is provided in a gap, in particular an annular gap formed between the rotating shaft and a stationary cover. Further, rotating airfoils or other appropriate means forming contoured flow channels may be arranged or formed on the shaft, said airfoils or other means being arranged in the duct downstream the stationary deflector device which is arranged for deflecting the flow into the direction of rotor rotation. Rotating airfoils have a deflection oriented against the rotor direction of rotation. More generally, the rotating flow channels will be provided such as to effect an acceleration of the fluid within the rotating channels, and a deceleration of the flow tangential absolute speed. Such means may be a ring provided in the shaft, said ring in turn being furnished with appropriately arranged and oriented nozzles or orifices. Thus, an expansion turbine stage is formed within the gap, between the shaft and the cover, serving to reduce the total pressure - and temperature - of the extracted fluid or coolant flow within the duct, while adding useful drive power to the shaft. It may then be found advantageous to arrange a further stationary deflector device, for instance a further row of stationary airfoils, within the gap, wherein said deflector device is arranged and configured to further add a tangential velocity component, directed into or against the shaft direction of rotation, thus again accelerating the flow and further lowering the static pressure and temperature.

In an aspect of the present disclosure the engine is a gas turbine engine and/or the expansion machine components to which a coolant shall be guided are rotating components and are in particular arranged on the shaft.

In a further aspect of the disclosure a guide vane element is described, in particular a guide vane element for a compressor of an engine as disclosed above. The guide vane element comprises at least one guide vane airfoil having a span width extending from a foot of the guide vane to a tip of the guide vane, the foot of the vane being designed such as to be located at an outer diameter of a guide vane ring, the foot thus constituting a radial outer side of the guide vane or guide vane element, and the tip designed such as to be located at an inner diameter of the guide vane ring, the tip thus constituting a radial inner side of the guide vane or guide vane element. The guide vane element further comprises a shroud at the tip of the guide vane airfoil. The shroud comprises a first face being disposed towards the airfoil and a second face disposed on an opposite side of the shroud. At least one deflector airfoil is provided on the second face. In a mounted state in the engine the deflector airfoil may then be disposed in a gap, in particular an annual gap. Said annular gap is formed between a shroud and the shaft or the rotor. The deflector airfoil is part of a deflector device as described above. In one aspect of the disclosure a number of deflector airfoils provided on a guide vane element may exceed a number of guide vane airfoils provided on the guide vane element. In a mounted state the resulting pitch of the deflection airfoils will be smaller than that of the guide vane airfoils. This may prove beneficial if the flow deflection to be provided by the deflector device formed by the deflector airfoils exceeds the flow deflection to be provided by the guide vane row provided by the guide vane airfoils. However, in further conceivable embodiments the number of deflector airfoils may be equal to or be smaller than the number of guide vane airfoils, due to the fact, that the flow is accelerated while flowing along the deflector airfoils.

The curvature of a deflector airfoil from a leading edge to a trailing edge may be oriented contrary to that of the guide vane airfoil. Further the camber angle of the deflector airfoil may exceed the camber angle of the guide vane airfoil. That is, the deflection of the guide vane airfoils may be oriented opposite the shaft direction of rotation, thus causing a deceleration of the flow through the guide vane row and a static pressure buildup of the working fluid flow in the compressor, while the deflector airfoils may be provided to cause an acceleration of a flow through the deflector device and consequently a reduction of static pressure. Each of the above mentioned geometric conditions may be fulfilled at least for the guide vane geometry measured at a guide vane airfoil tip in case the guide vane airfoil is a twisted airfoil.

In still another embodiment of the guide vane element the second face of the shroud is contoured such that a flow guided along said second face is deflected radially inwardly with respect to the guide vane ring. The second or radially inner face of the shroud thus constitutes, in this embodiment, a part of the deflector device. As noted above, a flow duct defined by said second face may be contoured such as to effect smooth radially inwardly oriented flow deflection. This may be found beneficial to avoid or reduce total pressure loss while a reduction in static pressure of the extracted fluid partial flow is strived for.

Further, if the shroud is arranged on an upstream side of the cover, the shroud may per se constitute a flow divider element for extracting the compressed fluid partial flow from the compressor main flow.

In still another aspect a deflection airfoil shroud may be arranged on a tip of the at least one deflection airfoil opposite the guide vane shroud second surface, and in particular at least one sealing element for sealing a gap present in mounted state between the deflection airfoil shroud and the shaft may be arranged on the deflection airfoil shroud. This measure serves to reduce leakage flows bypassing the deflector device and thus enhances the deflection efficiency.

A method is further disclosed for operating an engine as disclosed herein, wherein said engine comprises a compressor, an expansion machine, a rotor, and a stator, comprises a method for cooling components of the engine. The cooling method as further disclosed comprises extracting a compressed fluid partial flow from a compressed fluid main flow, accelerating a tangential velocity component of the compressed fluid partial flow thus lowering the static pressure and consequently the temperature of the extracted compressed fluid partial flow after the partial flow is extracted from a compressed fluid main flow, and feeding the compressed fluid partial flow with the accelerated tangential velocity component to an expansion machine component, in particular a rotating turbine component. In particular the direction of the tangential velocity component has the same direction as the rotor rotation. It is however possible to deflect the flow and add a tangential velocity component which is directed against the direction of the rotor rotation such that the resulting tangential velocity against the direction of the rotor rotation is, as an absolute value, larger than the tangential velocity component before the deflection. This would mean that the static pressure and temperature are lowered and a large relative velocity is generated between the shaft surface and the coolant flow, which may largely intensify the heat transfer between the shaft and the coolant.

A flow divider as described above may be applied for extracting the flow. A deflector device as described above may be applied to effect the acceleration of the extracted compressed fluid partial flow, which will subsequently be applied as a coolant for the expansion machine component.

The compressor applied in said method may be a turbo compressor, the turbo compressor comprising at least one row of rotating compressor blades and a corresponding row of stationary compressor guide vanes, said corresponding guide vanes arranged downstream from the compressor blades. The method then may comprise extracting the compressed fluid partial flow downstream a compressor rotating blade row and upstream the corresponding compressor stationary vane row, such that the compressed fluid partial flow when extracted from the compressor has a first tangential velocity component in the direction of the rotor rotation, and further deflecting the compressed fluid partial flow to add a second tangential velocity component in the direction of the rotor rotation, thus effecting the acceleration of the tangential velocity component. In particular said blade row and vane row are the blade and vane rows of the last stage, that is the last or most downstream stage, of a multistage compressor.

The method may furthermore comprise expanding said extracted compressed fluid in a working machine after it has been accelerated and before feeding it to the component. To this extent for instance turbine blades may be arranged on the shaft, in particular in a gap, more particular an annular gap, formed between the shaft and a stationary cover, said gap serving as the coolant flow duct, and said turbine blades arranged downstream the deflector device. The turbine blades are characterized in being fixedly arranged on the shaft or rotor and having an angle of deflection which is directed against the rotor direction of rotation. In being guided through a row of rotating turbine blades the fluid will lose both tangential speed and total pressure, while driving the turbine blades. To this extent the method comprises adding useful drive power to the shaft in expanding the extracted compressed partial fluid flow, that is, the coolant. The method may also be described as decelerating the coolant flow, and in particular reducing a tangential velocity component of the coolant flow in the shaft direction of rotation in guiding the flow through a row of said turbine blades. The method may further comprise accelerating the coolant into the shaft direction of rotation after it has been expanded in said working machine in a second stationary deflector device, thus further reducing the coolant static pressure. The method in this aspect also comprises providing a turbine blade row arranged or formed on the shaft in the coolant duct, that is in particular in said gap formed between the shaft and the cover, downstream from the deflector device, and may further comprise providing a second stationary deflector device in the coolant flow duct downstream the turbine blade row and in particular in said gap formed between the shaft and a cover.

While it is understood that it is well within the scope of the present disclosure to provide multiple of these coolant expansion steps, and consequently to provide multiple coolant expansion turbines as lined out above, and the engine may then comprise multiple rows of expansion turbine blades provided on the shaft within the gap, it will become readily apparent that the pressure should in certain embodiments be maintained above that of the hot working fluid of the expansion engine at the location where the coolant flow is intended to meet the hot gas flow, either at sealings or at a location where the extracted fluid or coolant flow is intended to mix with the hot gas flow. That is in particular when the components to be cooled are blades or other components provided with holes to admix the extracted fluid partial flow with the hot gas flow in the working machine, such as to provide e.g. film of effusion cooled turbine components, for instance film or effusion cooled blades. In this case, the engine and method as claimed herein may be improved by lowering the coolant pressure as the coolant outflow from said components may cause less interferences with a turbine main flow.

The engine referred to herein may for instance be an air breathing engine. The extracted fluid then is compressed air. The method then comprises extracting compressed air, in particular compressed air at a pressure below the final compression pressure. In particular the engine may be an air breathing gas turbine, more particular an air breathing internal combustion gas turbine. However, while the disclosed invention is described below in more detail for this specific type of engines, it is understood that the invention as described herein may be applied to different types of engines.

It is understood that the features described above may be readily combined with each other.

While the devices and methods disclosed herein are for instance related to rotor cooling, that is cooling of a shaft of an engine and/or component arranged thereon and/or connected to the rotor, they may also be applied for other purposes. It is understood that they may in one engine be combined with any other systems. In particular the cooling of stationary components, such as, but not limited to, turbine guide vanes and combustor liners, for instance, may be achieved by other features and methods known in the art now or in the future and may be combined with techniques like liquid cooling, while still being within the teaching of this disclosure and in particular within the scope of the devices and methods as claimed herein.

The subject matter described and/or claimed herein will become more apparent by virtue of the exemplary embodiments lined out below. However it is understood that these exemplary embodiments do not limit the disclosure to the specifics provided in the exemplary embodiments.

### BRIEF DESCRIPTION OF THE DRAWINGS

The teaching of the present disclosure is now to be explained in more detail by means of different embodiments and with reference to the attached drawings. In details the drawings show
- Fig. 1: a part of an exemplary embodiment of a gas turbine engine, illustrating a last compressor stage, first expansion turbine stages, and a coolant path for providing coolant to expansion turbine rotating components;
- Fig. 2: a detail of a last turbo compressor stage, comprising a flow divider and deflector means within the teaching of the present disclosure;
- Fig. 3: an exemplary embodiment of a guide vane element incorporating flow divider and deflector means disposed on a radially inner side of a guide vane shroud;
- Fig. 4: a view of the guide vane element depicting the guide vane and deflector airfoils;
- Fig. 5: a detail of a further embodiment of a last turbo compressor stage, comprising a flow divider and deflector means within the teaching of the present disclosure;
- Fig. 6: a detail of a third exemplary embodiment of a last turbo compressor stage and part of the coolant duct, comprising further means for expanding a coolant flow;
- Fig. 7: a first exemplary embodiment of a shrouded deflector;
- Fig. 8: a second exemplary embodiment of a shrouded deflector.

The drawings are largely schematic. Details not required for the understanding of the present teaching have been omitted for the ease of understanding and depiction.

### DETAILED DESCRIPTION OF DIFFERENT EMBODIMENTS OF THE INVENTION

The devices and methods described herein will become more apparent in view of exemplary embodiments described in more detail below. It should be noted that these exemplary embodiments are for the ease of understanding and presentation limited to single shaft internal combustion gas turbines, but may be applied to other types of engines, such as for instance, but not limited to, multiple shaft gas turbines as typically applied for aircraft propulsion, gas turbines comprising a dedicated useful power drive shaft as for instance applied in automotive applications, and other types of engines.

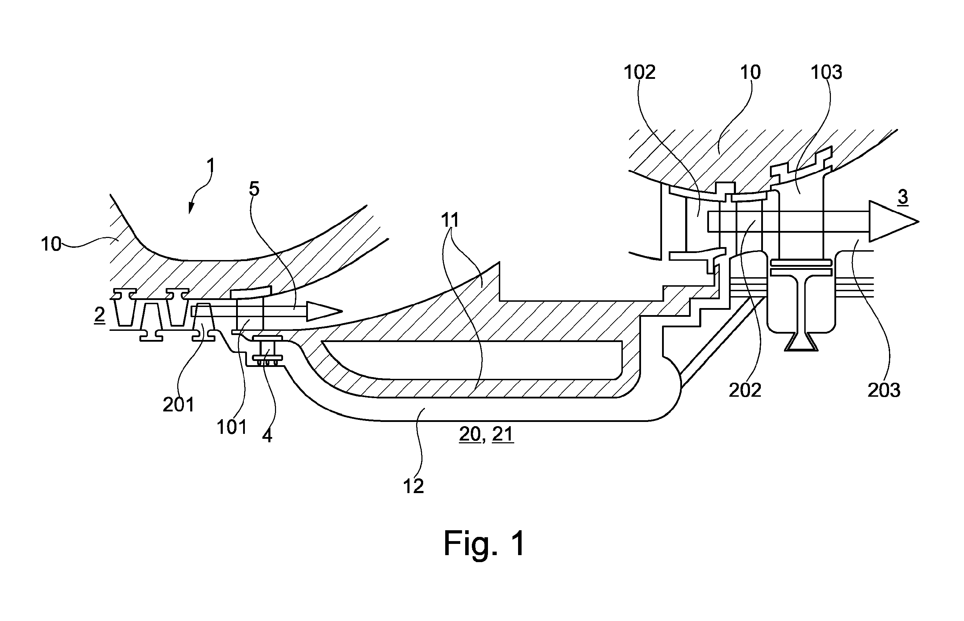

A first exemplary embodiment of a gas turbine engine applying the teaching of the present disclosure is shown in figure 1. The gas turbine engine 1 comprises a compressor 2 and an expansion turbine 3. It further comprises a stator 10 and the rotor 20. Only the last stages of compressor 2 and the first stages of the turbine 3 are shown in this figure. The last compressor stage comprises compressor blade 201 and compressor vane 101. Further compressor vanes and blades (no reference numerals) are shown.
Of the turbine, first stage vane 102, first stage blade 202, second stage vane 103 and second stage blade 203 are shown in this figure. The rotating blades are arranged on the shaft 21 and form part of the rotor 20. The stationary vanes are fixed at the housing and form part of the stator. In a region between the compressor and the turbine a stationary cover 11 is arranged surrounding the shaft 21. An annular duct 12 is formed between the cover 11 and the shaft 21, and extends from the compressor to the turbine. Between the row of last compressor blades 201 and the row of last compressor vanes 101 the duct is open towards the compressor main flow 5. The duct 12 may be used to guide a partial flow of compressed fluid serving as a coolant for rotating turbine parts from the compressor to the turbine. A flow divider means 4 is arranged at the upstream end of the duct 12. According to the present disclosure a deflector means is arranged either at the flow divider 4 or at another location within the duct 12.

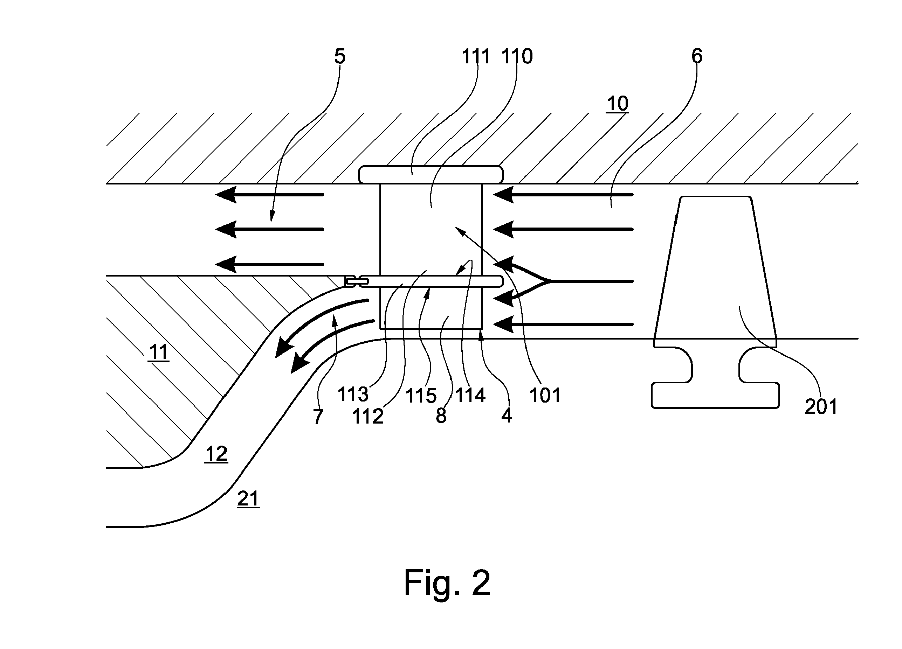

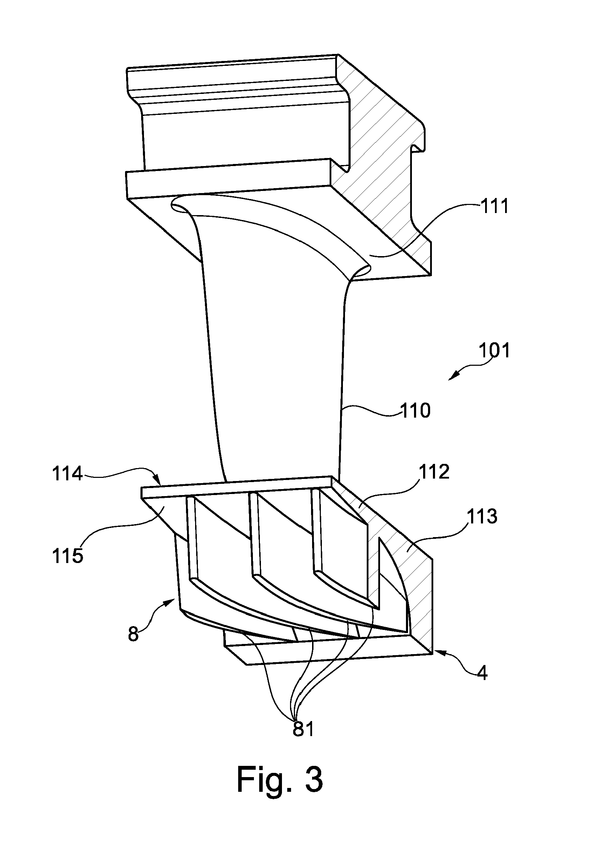

Figure 2 depicts the last compressor stage and the flow divider 4 in more detail. A last compressor vane comprises a guide vane airfoil spanning from a foot 111 to a tip 112. The foot is in a known manner equipped with a device for fixing the vane to a housing of the gas turbine. At the tip of the vane airfoil, shroud 113 is provided. The shroud 113 comprises a first face 114 facing the guide vane airfoil and a second face 115 facing away from the airfoil. It is understood that the foot of the vane is arranged at a radially outer side of the guide vane row while the tip of the guide vanes comprising the shroud is arranged on a radially inner side of the guide vane row. A flow divider means 4 is arranged between the guide vane tip and the rotor shaft 21. The flow divider 4 is in this exemplary embodiment provided by the guide vane shroud 113. The flow divider means 4 serves to divide a fluid flow 6 coming from the last compressor stage blades 201 into a working fluid flow 5 provided in a known manner to a combustor or any other means for heating the turbine working fluid, and a compressed fluid extracted partial flow 7. It is understood that a further part flow of the working fluid flow may subsequently be extracted from the working fluid flow 5 to provide cooling air for stationary parts of the engine; however, as this is not a subject of the present disclosure this will not be lined out in more detail. It will further be understood that the fluid flows 5 and 6 are the compressor main flow. It will be appreciated that the fluid flow 6 emanating from the rotating compressor rotating blade row has a tangential velocity component oriented in the direction of the rotor or shaft rotation. Partial flow 7 is guided into annular duct 12 formed between the shaft 21 and a cover 11. Further, flow divider means 4 comprises a deflector means 8, which will be lined out in more detail with reference to figure 3.

Figure 3 depicts an exemplary embodiment of a guide vane 101 as shown in figure 2. As is seen, the second, radially inner, face 115 of the shroud 113 forms a flow divider 4. An extracted compressed air partial flow flowing along the shroud second surface is on the one hand deflected radially inwardly to enter duct 12. On the other hand, a deflector 8 is arranged on the radially inner second shroud face 115. The deflector device 8 comprises deflector airfoils 81. The deflector airfoils 81 are arranged and adapted to deflect a fluid flow flowing along said airfoils in a tangential direction.

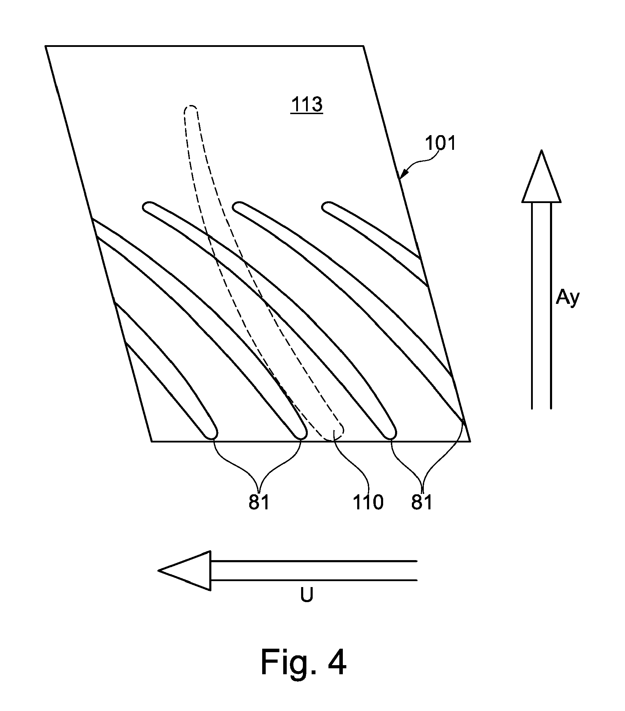

In figure 4 the guide vane 101 is schematically shown in a view in a radial direction. Arrow U depicts the rotor direction of rotation. Arrow Ax shows the axial direction of flow through the engine. The vane 101 comprises the guide vane airfoil 110 on the first face of shroud 113 and deflector airfoils 81 disposed on a second face of shroud 113. The fluid flow flows along the airfoils, or through flow channels spun up by multiple airfoils, respectively, from an airfoil leading edge to an airfoil trailing edge and is thereby deflected by the airfoils. As is seen in figure 4, the guide vane 101 comprises one guide vane airfoil 110 and a multitude of deflector airfoils 81. It is possible and well within the scope of the present disclosure to provide a guide vane element comprising a multitude of guide vane airfoils. In certain embodiments, however, the number of deflector airfoils will exceed the number of guide vane airfoils resulting in a deflector airfoil pitch smaller than that of the guide vane airfoils. This may serve to more efficiently allow a greater deflection by the deflector airfoils. As has also been lined out above, an incident flow emanating from a row of rotating compressor blades will have a tangential velocity component in the rotor direction of rotation, that is, in the direction depicted by arrow U. The upstream nominal flow angle of the airfoils, as defined by the airfoil camber line at the airfoil leading edge, will be arranged such that it is at least essentially identical with an angle of the inflow, or, in other words, the camber line of an airfoil at the leading edge will be at least essentially parallel to the inflow at least in some operating conditions at a design operating state. The compressed fluid main flow is deflected by guide vane airfoil 110 against the rotor direction of rotation. Thus, the tangential velocity of a fluid flow along guide vane airfoil 110, or through an array of guide vane airfoils, respectively, will be reduced while the axial speed component will remain largely unchanged, resulting in a static pressure buildup. The extracted fluid partial flow is deflected by the deflector airfoils 81 into the direction of rotation, that is, tangential speed is added and the static pressure and accordingly also the static temperature of the fluid is lowered. A coolant fluid flow through the duct 12 may thus be provided having a decreased temperature and static pressure, and a tangential velocity providing a closer match to the circumferential velocity of the shaft.

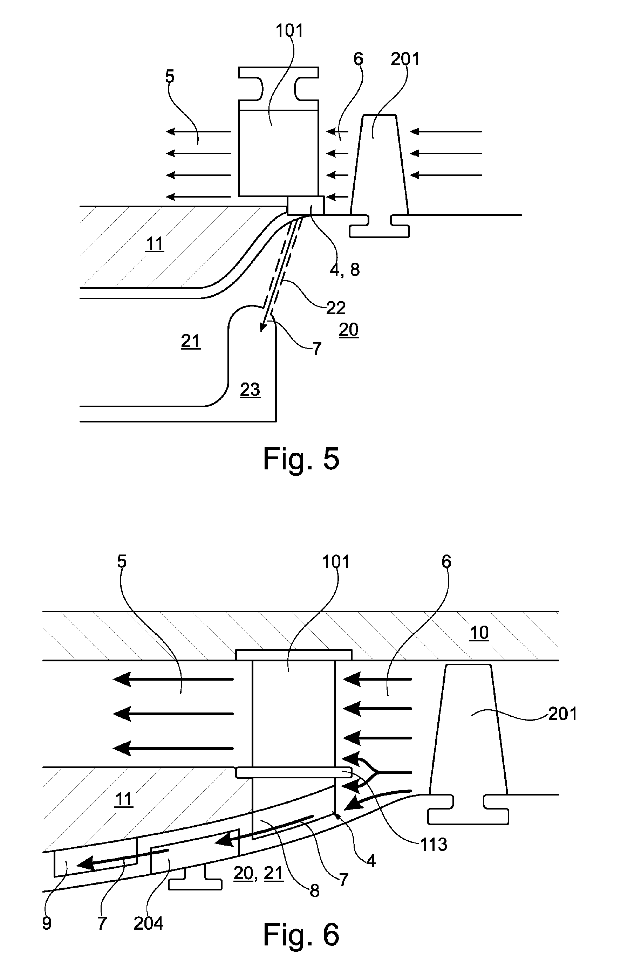

A further embodiment of an engine as disclosed herein is shown in figure 5. In this embodiment, a rotor cavity 23 is provided in the rotor 20 and provides a duct for the rotor coolant flow. A bore 22 is provided connecting the outside of the rotor 20 and the cavity 23. A fluid flow 6 emanating from a row of compressor blades 201 is divided into a working fluid flow 5 which is directed through a row of guide vanes 101 and thereby decelerated, as described above. Further, a flow divider and deflector device 4, 8 is provided on a radially inner side of the compressor guide vane 101. A partial flow 7 is extracted from the fluid flow 6 and guided through rotor bore 22 into rotor cavity 23. The flow divider and deflector 4, 8 serves to deflect the extracted flow on the one hand radially inwardly, and also into the rotor direction of rotation. Thus, the extracted fluid flow is directed towards an outer opening of the rotor bore 22, and receives a tangential velocity which may at least closely match the circumferential velocity of an outer opening of the rotor bore 22 at the outer circumference of the rotor 20. Entry of the extracted fluid flow 7 into the rotor bore 22 may thus be largely facilitated without the need to provide complicated inlet opening geometries of rotor bore 22. It will be appreciated that this mode of coolant extraction may be realized between each compressor blade row and subsequent compressor vane row.

The embodiment of figure 6 enables to decrease the pressure of the coolant provided to the rotating turbine components even further. As previously described, a fluid flow 6 emanating from a row of rotating compressor blades 201 is divided into a working fluid flow 5 and into extracted fluid partial flow 7. Extracted fluid partial flow 7 is guided by flow divider 4 into a gap formed between the shaft 21 and the cover 11. It is further accelerated by deflector 8 into the rotor direction of rotation. Turbine blades 204 are provided on the rotor within the annular gap and downstream the deflector 8. The turbine blades 204 are shaped such as to deflect the flow through a row of turbine blades against the rotor direction of rotation. Thus, an extracted fluid flow 7 flowing through a row of turbine blades 204 will be decelerated and loose total pressure while adding useful work to the rotor. Second deflectors 9 are arranged downstream the row of turbine blades 204 and are shaped and arranged such as to deflect the partial fluid flow 7 into the rotor direction of rotation, thus lowering again the static pressure of the extracted fluid flow 7.

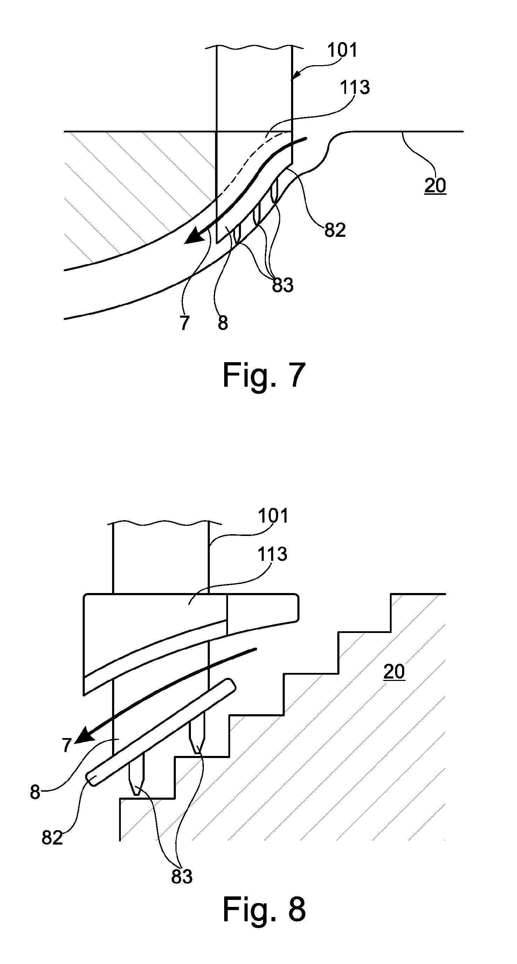

Further details of exemplary embodiments of the devices disclosed herein are shown in figures 7 and 8. As will be appreciated, a certain clearance needs to be maintained between the stationary deflectors and the rotor 20, or the shaft 21, respectively. Due to the relatively small size of the deflectors leakage flows through said clearances will be comparatively large, in turn reducing the deflection effectiveness. In the embodiment shown in figure 7 the deflector 8 is furnished with a radially inner shroud 82, which in turn is equipped with sealing tips 83. However, due to axial movement between the rotor and the stator clearances still need to be maintained on a relatively high level in the embodiment of figure 7 in order to avoid contact between rotating and stationary parts. In the embodiment shown in figure 8 the rotor is thus, in the region where the deflector 8 is arranged, designed not to taper continuously, but in a stepwise manner. Thus, when an axial movement between the rotor and the stator occurs the sealing tips 83 move relative to the rotor along a section of constant diameter. This allows to design and maintain smaller clearances between the stationary sealing tips 83 and the rotor 20.

While the invention has been described in view of exemplary embodiments of a gas turbine engine, the skilled person will appreciate the applicability of the teaching disclosed herein to other types of engines. For instance, the deflector device may be provided at a different location within the duct and may be attached to the cover instead of guide vane shrouds. Moreover it will be understood that the embodiments provided are intended as examples only in order to facilitate understanding of the teaching of the present disclosure and shall in no way provide limitations to the invention as disclosed and claimed herein. It is understood that deviations from the exemplary embodiments provided are possible and are well within the scope of the disclosed and claimed invention.

### LIST OF REFERENCE NUMERALS

- 1: gas turbine engine
- 2: compressor
- 3: turbine
- 4: flow divider
- 5: compressed working fluid flow
- 6: fluid flow from compressor last stage blade row
- 7: extracted compressed fluid partial flow
- 8: deflector
- 9: deflector
- 10: stator
- 11: cover
- 12: duct
- 20: rotor
- 21: shaft
- 22: rotor bore
- 23: rotor cavity
- 81: deflector airfoil
- 82: deflector shroud
- 83: sealing tips
- 101: last compressor stage vane
- 102: first turbine stage vane
- 103: second turbine stage vane
- 110: guide vane airfoil
- 111: guide vane foot
- 112: guide vane tip
- 113: guide vane shroud
- 114: shroud first face
- 115: shroud second face
- 201: last compressor stage blade
- 202: first turbine stage blade
- 203: second turbine stage blade
- 204: turbine blade

- U: shaft/rotor direction of rotation
- Ax: axial flow direction

## Claims

1. An engine (1), said engine comprising a compressor (2), an expansion machine (3), and a shaft (21),
the shaft (21) having a direction of rotation (U),
the engine comprising a compressed fluid main flow path,
a flow divider means (4) arranged at and fluidly connected to a compressor main flow path,
a duct (12) fluidly connecting the flow divider and expansion machine components and arranged such that, when the engine is operated, a fluid (7) is guided through the duct from the flow divider to said expansion machine components,
**characterized in that** a flow deflector device (8) is arranged within a flow path provided by any of the flow divider means and said duct, said flow deflector device being arranged and adapted to deflect a flow therethrough directed from the flow divider toward the expansion machine components in a tangential direction.

2. The engine according to claim 1, wherein the flow deflector device (8) is arranged at an upstream side of the duct (12) or the flow path..

3. The engine according to any of the preceding claims, wherein the compressor is a turbo compressor comprising at least one row of blades (201) arranged on the shaft and a corresponding row of vanes (101) arranged downstream of said row of blades, **characterized in that** the flow divider (4) is arranged between said row of blades and said row of vanes.

4. The engine according to claim 3, wherein the turbo compressor is a multistage turbo compressor, **characterized in that** the flow divider is arranged between the corresponding blade (201) row and vane (101) row of a most downstream arranged compressor stage.

5. The engine according to any of the preceding claims, **characterized in that** the flow deflector means comprises a multitude of deflector airfoils (81) providing an upstream nominal flow angle and a downstream nominal flow angle, each angle measured against an axial direction of the shaft, wherein in particular the downstream nominal angle is bigger than the upstream nominal angle and is tilted towards the shaft rotation direction (U) such as to deflect a fluid flow into the shaft rotation direction.

6. The engine according to any of the preceding claims, **characterized in that** the deflector device (8, 9) is arranged on a stationary part of the engine (4, 11, 101) and is in particular arranged within a gap (12) formed between the shaft (21) and said stationary part (4, 11, 101).

7. The engine according to any of the preceding claims, **characterized in that** the deflection device is arranged on at least one radially inner shroud (113) of compressor guide vanes (101).

8. A guide vane element (101), in particular a guide vane element for a compressor of an engine as claimed in any of the preceding claims, the guide vane element comprising at least one guide vane airfoil (101) having a span width extending from a foot (111) of the guide vane to a tip (112) of the guide vane, the foot of the vane being designed to be located at an outer diameter of a guide vane ring and the tip designed to be located at an inner diameter of the guide vane ring, the guide vane element further comprising a shroud (113) provided at the tip of the guide vane airfoil, the shroud comprising a first face (114) being disposed towards the airfoil and a second face (115) disposed on an opposite side of the shroud, **characterized in that** at least one deflector airfoil (81) is disposed on the second face.

9. The guide vane element as claimed in any of the preceding claims claiming a guide vane element, **characterized in that** the curvature of a deflector airfoil from a leading edge to a trailing edge is oriented opposite the deflection of the guide vane airfoil and/or the camber angle of the deflector airfoil exceeds the camber angle of the guide vane airfoil, each condition being fulfilled at least for the guide vane deflection measured at the guide vane airfoil tip.

10. The guide vane element as claimed in any of the preceding claims claiming a guide vane element, **characterized in that** the second face (115) of the shroud (113) is contoured such that a flow guided along said second face is deflected radially inwardly with respect to a guide vane ring.

11. The guide vane element as claimed in any of the preceding claims claiming a guide vane element, **characterized in that** a deflector shroud (82) is provided on a tip of the at least one deflector airfoil (81) opposite the guide vane shroud second face (115), and in particular at least one sealing element (83) for sealing a gap present in mounted state between the deflector shroud (82) and the rotor and/or shaft (20; 21), in a mounted state, is arranged on the deflector airfoil shroud.

12. A method for cooling components of an engine (1), said engine
comprising a compressor (2), an expansion machine (3), a rotor (20), and a stator (10), **characterized in** comprising extracting a compressed fluid partial flow (7) from a compressed fluid main flow (6),
accelerating a tangential velocity component of the compressed fluid partial flow thus lowering the static pressure and consequently the static temperature of the partial flow after the compressed fluid partial flow is extracted from the compressed fluid main flow,
feeding the compressed fluid partial flow with the tangential velocity component to at least one of an engine component, in particular a rotating turbine component (202, 203), and the rotor shaft (21) and wherein in particular the direction of the tangential velocity component has the same direction as the rotor rotation (U).

13. The method according to the preceding method claim, wherein the
compressor is a turbo compressor, the turbo compressor comprising at least one row of rotating compressor blades (201) and a corresponding row of stationary compressor guide vanes (101), said corresponding guide vanes arranged downstream from the compressor blades, the method being **characterized in** comprising extracting the compressed fluid partial flow downstream from a compressor rotating blade row and upstream the corresponding compressor stationary vane row, such that the compressed fluid partial flow when extracted from the compressor has a first tangential velocity component in the direction of the rotor rotation (U), and deflecting the compressed fluid partial flow to add a second tangential velocity component in the direction of the rotor rotation, thus effecting the acceleration of the tangential velocity component, wherein in particular said blade row and vane row are the blade and vane rows of the last stage of a multistage compressor.

14. The method according to any of the preceding method claims, **characterized in** comprising expanding said compressed fluid partial flow in a working machine.

15. The method according to claim 14, **characterized in** comprising
guiding the flow through flow channels provided by at least one rotating element arranged on the shaft and deflecting the flow against the shaft direction of rotation, and in particular in guiding it through a row of rotating blades (204) having a deflection angle oriented against the shaft direction of rotation, after it has been accelerated and before feeding it to the engine component.
